# EUROPÄISCHE PATENTSCHRIFT

(11) **EP 0 557 703 B1**
(45) Veröffentlichungstag und Bekanntmachung des Hinweises auf die Patenterteilung: **02.10.1996**
(21) Anmeldenummer: 93100627.4
(22) Anmeldetag: 16.01.1993
(51) Int. Cl.: H02G 3/06, F16L 33/00

(54) **Anschlusselement**
Joining element
Elément de raccord

(30) Priorität: 27.02.1992 DE 4206014
(43) Veröffentlichungstag der Anmeldung: 01.09.1993
(73) Patentinhaber: Daimler-Benz Aerospace Airbus Gesellschaft mit beschränkter Haftung, 21129 Hamburg (DE)
(72) Erfinder: Kirma, Safa, W-2000 Wedel/Holstein (DE)
(74) Vertreter: Hansmann, Dierk, Dipl.-Ing.

(56) Entgegenhaltungen:
- CH-A- 65 010
- DE-A- 3 911 406
- DE-A- 3 914 936
- GB-A- 8 458
- US-A- 3 711 633
- US-A- 4 328 979

## Beschreibung

Die Erfindung betrifft ein Anschlußelement, das ein Gehäuse zur Halterung eines mindestens einen elektrischen Leiter umgebenden Schutzschlauches aufweist, wobei das Gehäuse im Bereich eines einer Überwurfmutter zuwendbaren Endes geteilt ist und dieses Ende mit einer einer Außenkontur des Schutzschlauches angepaßten Innenkontur versehen ist

Derartige Vorrichtungen werden insbesondere bei Anwendungen im Bereich der Luft- und Raumfahrt dazu verwendet, um innerhalb des Schutzschlauches geführte elektrische Leiter ausreichend sicher im Bereich von Kontaktstellen zu fixieren. Durch die Fixierung erfolgt dabei eine ortsfeste Anordnung der die elektrischen Leiter führenden Schutzschläuche. Die Schutzschläuche sorgen darüber hinaus für eine ausreichende Sicherung der elektrischen Leitungen gegen sie beeinträchtigende Einflüsse.

Die Schutzschläuche sind zur Gewährleistung einer ausreichenden Stabilität üblicherweise als Wellschläuche ausgebildet. Es sind sowohl Ausführungsformen als Ringwellschläuche, bei denen aufeinanderfolgende Ringsegmente vorgesehen sind, als auch eine Ausbildung als Wendelschläuche, bei denen im Bereich von äußeren Begrenzungen eine im wesentlichen spiralförmige Struktur vorgesehen ist, bekannt. Zur Halterung der Schläuche ist es erforderlich, die Schläuche mit einer Halterung zu umschließen, die exakt der Außengeometrie der Schläuche angepaßt ist. In derartige Halterungen werden die Schläuche bei einer spiralförmigen Ausbildung hineingeschraubt, was zu Verdrillungen führen kann. Bei Schraubverbindungen im Bereich von zwei Enden der Schläuche ist es darüber hinaus möglich, daß bei einem Einschrauben des einen Endes durch eine Übertragung der Drehbewegung ein Herausschrauben im Bereich des anderen Endes auftritt.

Ein weiteres bekanntes Verfahren zur Verbindung eines Schutzschlauches mit einem Anschlußelement erfolgt derart, daß zunächst der Schutzschlauch im Bereich eines vorderen Endes erwärmt und gegen einen stumpfen Gegenstand gepreßt wird. Anschließend wird der so aufgebördelte Bereich des Schlauches zwischen eine Muffe und einen Ring eingeklemmt und mit Hilfe einer Überwurfmutter festgezogen.

Darüber hinaus ist es auch möglich, den Schutzschlauch mit einem Werkzeug zunächst derart aufzuweiten, daß ein Innenring in den Schlauch eingesetzt werden kann. Bei diesem Einsetzen des Innenringes wird der Schlauch um diesen Innenring nach innen gebördelt. Mit Hilfe einer Überwurfmutter wird danach der mit dem Schutzschlauch versehene Innenring und ein Außenring gequetscht. Auch dieses Verfahren ist kompliziert durchzuführen und zeitraubend in der Anwendung.

Schließlich ist es auch möglich, das Anschlußelement in den Schutzschlauch einzuführen. Durch diese Einführung erfolgt jedoch eine Verengung des Querschnittes des Schlauches. Darüber hinaus ist es möglich, durch den Einführvorgang innerhalb des Schlauches befindliche elektrische Leitungen zu beschädigen.

Aus der DE-A-39 14 936 ist ein Anschlußelement zur Halterung und Aufnahme eines Schutzschlauches bekannt, das zwei getrennte aufsetzbare Halbschalen mit einer angepaßten durchgehenden Innenkontur aufweist und einmal im Bereich des Gehäuses durch eine Überwurfmutter sowie zusätzlich durch ein weiteres Element für den Zusammenhalt verbunden ist.

Weiterhin ist nach der DE-A-3 914 936 ein geteilter Klemmverbinder für Rohre und Schläuche bekannt, um eine erhöhte Dichtigkeit sicherzustellen. Hierbei ist ein Stützring vorgesehen, wobei der ein axial geschlitzter Klemmring ein Rohr- bzw. Schlauchende mit einem Preßsitz umgreift.

Aufgabe der vorliegenden Erfindung ist es daher, ein Anschlußelement der einleitend genannten Art derart zu verbessern, daß eine Aufnahme des Schutzschlauches ohne Querschnittverengung ermöglicht wird und ein Einsetzen des Schutzschlauches in einfacher Weise erfolgen kann.

Diese Aufgabe wird erfindungsgemäß dadurch gelöst, daß die Teilung des Gehäuses durch Schlitze in Richtung einer Längsachse des Gehäuses über einen Teilbereich verläuft und das weitere Ende geschlossen als Einführstutzen ausgebildet ist sowie mit einer ein Einschieben des Schutzschlauches zulassende Innengestaltung aufweist, wobei die durch Schlitze getrennten Gehäuseteile federnd gegeneinander verspannbar ausgebildet sind.

Durch diese Teilung des Gehäuses ist es möglich, den Schutzschlauch zunächst ausreichend weit in das Gehäuse einzuschieben, ohne daß hierzu Drehbewegungen erforderlich sind. Erst nach einer ausreichenden Positionierung des Schutzschlauches erfolgt ein Zusammenfügen der federnd gegeneinander drückbaren Endelemente des Gehäuses. Das Zusammendrücken kann beispielsweise durch das Aufschieben der Überwurfmutter erfolgen, die zur Verbindung des Anschlußelementes mit einem Gegenelement vorgesehen ist. Durch die der Außenkontur des Schutzschlauches angepaßte Innenkontur im Bereich des geteilten Endes erfolgt nach einem Zusammenfügen der Gehäuseelemente eine sichere Fixierung des Schutzschlauches, die ein Hinausrutschen aus dem Gehäuse vermeidet. Die Innengestaltung im Bereich des anderen Endes des Gehäuses, die insbesondere glattflächig gestaltet sein kann, ermöglicht ein behinderungsfreies Einschieben des Schutzschlauches.

Eine besonders einfach zu fertigende und bei einer Verwendung eine hohe Widerstandsfähigkeit aufweisende Ausführungsform zur bereichsweisen Teilung des Gehäuses wird dadurch bereitgestellt, daß sich die als Schlitz ausgebildete Teilung ausgehend vom einen Ende des Gehäuses in Richtung auf einen im Bereich des anderen Endes angeordneten Einführstutzen mindestens über etwa die Hälfte der Längsausdehnung des Gehäuses erstreckt. Bei Realisierung einer geeigneten Eigenspannung des geteilten Gehäuses ist es in einfacher Weise möglich, durch eine Verschiebung der Überwurfmutter entweder eine Aufspreizung des geteilten Gehäuses oder eine Zusammenführung der Gehäuseteile vorzunehmen.

Zur Vermeidung einer Rißbildung im Bereich des geschlossenen Gehäuseteiles wird vorgeschlagen, daß der Schlitz im Bereich seines dem Einführstutzen zugewandten Endes in eine Kerbspannungen reduzierende Endausnehmung übergeleitet ist.

Eine besonders einfache Ausführungsform des Gehäuses wird dadurch bereitgestellt, daß sich das Gehäuse im wesentlichen Bereich seiner Ausdehnung etwa linear entlang einer Längsachse erstreckt.

Zur Ermöglichung einer abgewinkelten Führung des Schutzschlauches ist es aber auch möglich, daß sich das Gehäuse mindestens entlang eines Teiles seiner Ausdehnung bogenförmig erstreckt.

Eine zweckmäßige Anordnung der Teilung des Gehäuses erfolgt dadurch, daß jeweils ein Schlitz in bezüglich des größten Krümmungsradius des Biegeverlaufes des bogenförmigen Gehäuses seitlichen Bereichen angeordnet ist. Es ist aber auch möglich, daß ein Schlitz im Bereich eines inneren Biegungsverlaufes und ein weiterer Schlitz im Bereich eines äußeren Biegungsverlaufes des bogenförmigen Gehäuses angeordnet ist.

Bei einer Ausführung des Gehäuses aus Kunststoff, der in einem Spritzgußvorgang geformt wird, ist es insbesondere vorteilhaft, daß einer der Schlitze als eine als Werkzeugaussparung gestaltete Ausnehmung zur Ermöglichung eines Einführens eines Schiebers eines Spritzgußwerkzeuges ausgebildet ist, die im Bereich eines äußeren Biegungsverlaufes des bogenförmigen Gehäuses angeordnet ist. Durch die Integration des einen der Schlitze in die vergleichsweise breit ausgebildete Werkzeugaussparung wird das der Werkzeugaussparung zugewandte Gehäuseteil aus vergleichsweise schmalen Stegen ausgebildet, die in besonders einfacher Weise mit einer ausreichenden Elastizität versehen werden können.

In der Zeichnung sind Ausführungsbeispiele der Erfindung schematisch dargestellt. Es zeigen:
- Fig. 1: eine teilweise geschnittene Seitenansicht eines winkelförmigen Anschlußelementes,
- Fig. 2: eine teilweise geschnittene Seitenansicht eines Anschlußelementes mit einem stutzenförmigen Gehäuse,
- Fig. 3: eine teilweise geschnittene Seitenansicht eines winkelförmigen Anschlußelementes mit äußeren Kontaktelementen zur Fixierung eines Schrumpfschlauches **und**
- Fig. 4: eine Figur 3 entsprechende Ausführungsform, bei der das Gehäuse stutzenförmig ausgebildet ist.

Das Anschlußelement besteht im wesentlichen aus einem Gehäuse (1) sowie einer Überwurfmutter (2). Das Gehäuse (1) weist einen im wesentlichen rohrförmigen Einführstutzen (3) sowie einen Fixierteil (4) auf. Der Fixierteil (4) ist durch Schlitze (5) längsgeteilt.

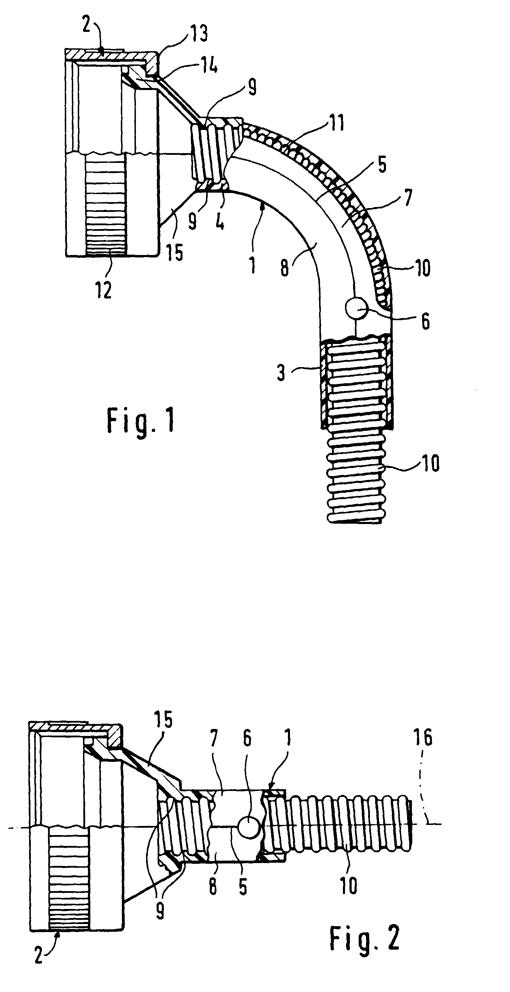

Bei der Ausführungsform gemäß Figur 1 erstreckt sich das Gehäuse (1) im wesentlichen bogenförmig ausgehend vom Einführstutzen (3) in Richtung auf die Überwurfmutter (2). Zur Vermeidung von unzulässig großen Kerbspannungen sind die Schlitze (5) in Richtung auf den Einführstutzen (3) in eine Endausnehmung (6) übergeleitet, die vorzugsweise eine kreisförmige Gestaltung aufweist. Im Bereich des Einführstutzens (3) weist das Gehäuse (1) eine im wesentlichen glattflächige Innengestaltung auf. Im Bereich des Fixierteiles (4), das aus federnd gegeneinander verspannbaren Gehäuseteilen (7,8) ausgebildet ist, ist eine profilierte Innenwandung (9) vorgesehen. Die Profilierung der Innenwandung (9) weist eine an die Außenstruktur eines in das Gehäuse (1) einführbaren Schutzschlauches (10) angepaßte Gestaltung auf.

Zur Ermöglichung einer einfachen spritzgußtechnischen Fertigung eines aus Kunststoff ausgebildeten Gehäuses (1) ist dieses im Bereich einer Außenbegrenzung des gebogenen Teiles mit einer Werkzeugaussparung (11) versehen. Hierdurch wird das zur Formung des Gehäuses (1) benötigte Werkzeug vereinfacht. Die Gehäuseteile (7,8) werden vorzugsweise in einer ausgehend von der Endausnehmung (6) gespreizten Anordnung gefertigt. Hieraus resultiert eine federnde Eigenspannung, die bei einem Entfernen der die Gehäuseteile (7,8) zusammenführenden Überwurfmutter (2) zu einem Aufspreizen führt, das eine einfache Entnahme bzw. eine einfache Zuführung des Schutzschlauches (10) zuläßt.

Die Überwurfmutter (2) ist mit eine ihre Handhabbarkeit verbessernden Außenriffelung (12) versehen. Zur Fixierung der Überwurfmutter (2) im Bereich des Gehäuses (1) weist die Überwurfmutter (2) einen Hinterfassungssteg (13) auf, der einen Absatz (14) im Bereich einer trichterförmigen Gehäuseerweiterung (1) hintergreift.

Die Anordnung der Schlitze (5) kann zum einen bezüglich der Biegung des Bogens seitlich und somit um 90 Grad versetzt zur Werkzeugaussparung (11) angeordnet werden. Es ist aber auch möglich, einen der Schlitze (5) im Bereich einer Innenbiegung anzuordnen und den zweiten Schlitz (5) in die Werkzeugaussparung (11) zu integrieren.

Durch die Kombination des Anschlußteiles und des Schutzschlauches (10) entsteht ein geschlossenes System, in dem die eingeschlossenen elektrischen Leiter zuverlässig gegen äußere Einflüsse geschützt werden. Das Anschlußelement ist insbesondere als ein Endgehäuse zur Ermöglichung einer Zugentlastung ausgebildet. Innerhalb der Schutzschläuche und des Anschlußelementes können sowohl aus einzelnen Leitungen gebildete Kabelbündel als auch komplette Kabelbäume verlegt werden.

Gemäß der Ausführungsform in Figur 2 erstreckt sich das Gehäuse (1) im wesentlichen stutzenförmig und symmetrisch entlang einer Längsachse (16). Mit Ausnahme des im wesentlichen linearen Verlaufes des Gehäuses (1) entspricht diese Ausführungsform der in Figur 1 dargestellten Ausführungsform.

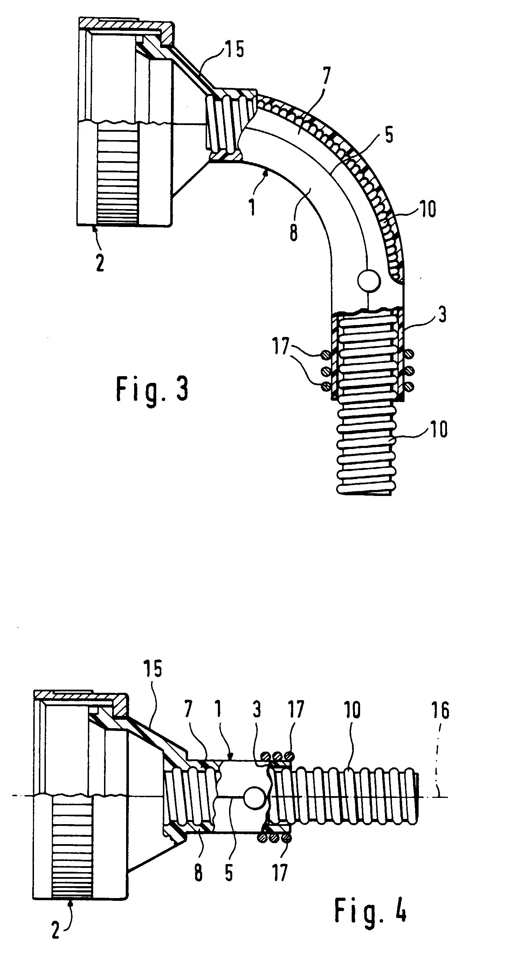

Bei den Ausführungsformen gemäß Figur 3 und 4 sind im Bereich des Einführstutzens (3) zusätzliche Außenprofilierungen (17) vorgesehen. Mit Hilfe dieser Außenprofilierungen ist es möglich, einen zusätzlichen Isolierschlauch über den Schutzschlauch (10) sowie das Gehäuse (1) zu ziehen, der insbesondere die Feuchtigkeitsdichtigkeit verbessert. Ein derartiger zusätzlicher Isolierschlauch kann beispielsweise als ein Schrumpfschlauch ausgebildet sein.

## Patentansprüche

1. Anschlußelement, das ein Gehäuse (1) zur Halterung eines mindestens einen elektrischen Leiter umgebenden Schutzschlauches (10) aufweist, wobei das Gehäuse (1) im Bereich eines einer Überwurfmutter (2) zuwendbaren Endes geteilt ist und dieses Ende mit einer einer Außenkontur des Schutzschlauches (10) angepaßten Innenkontur versehen ist, dadurch gekennzeichnet, daß die Teilung des Gehäuses (1) durch Schlitze (5) in Richtung einer Längsachse des Gehäuses (1) über einen Teilbereich verläuft und das weitere Ende geschlossen als Einführstutzen (3) ausgebildet ist sowie mit einer ein Einschieben des Schutzschlauches (10) zulassende Innengestaltung aufweist, wobei die durch Schlitze (5) getrennten Gehäuseteile (7,8) federnd gegeneinander verspannbar ausgebildet sind.

2. Anschlußelement nach Anspruch 1, dadurch gekennzeichnet, daß sich die als Schlitz (5) ausgebildete Teilung ausgehend vom einen Ende des Gehäuses (1) in Richtung auf einen im Bereich des anderen Endes angeordneten Einführstutzen (3) mindestens über etwa die Hälfte der Längsausdehnung des Gehäuses (1) erstreckt.

3. Anschlußelement nach Anspruch 1 oder 2, dadurch gekennzeichnet, daß der Schlitz (5) im Bereich seines dem Einführstutzen (3) zugewandten Endes in eine Kerbspannungen reduzierende Endausnehmung (6) übergeleitet ist.

4. Anschlußelement nach einem der Ansprüche 1 bis 3, dadurch gekennzeichnet, daß sich das Gehäuse (1) im wesentlichen Bereich seiner Ausdehnung etwa linear entlang einer Längsachse (16) erstreckt.

5. Anschlußelement nach einem der Ansprüche 1 bis 3, dadurch gekennzeichnet, daß sich das Gehäuse (1) mindestens entlang eines Teiles seiner Ausdehnung bogenförmig erstreckt.

6. Anschlußelement nach Anspruch 5, dadurch gekennzeichnet, daß jeweils ein Schlitz (5) in bezüglich des größten Krümmungsradius des Biegeverlaufes des bogenförmigen Gehäuses (1) seitlichen Bereichen angeordnet ist.

7. Anschlußelement nach Anspruch 5, dadurch gekennzeichnet, daß ein Schlitz (5) im Bereich eines inneren Biegungsverlaufes und ein weiterer Schlitz (5) im Bereich eines äußeren Biegungsverlaufes des bogenförmigen Gehäuses (1) angeordnet ist.

8. Anschlußelement nach Anspruch 5, dadurch gekennzeichnet, daß einer der Schlitze (5) als eine als Werkzeugaussparung (11) gestaltete Ausnehmung zur Ermöglichung eines Einführens eines Schiebers eines Spritzgußwerkzeuges ausgebildet ist, die im Bereich eines äußeren Biegungsverlaufes des bogenförmigen Gehäuses (1) angeordnet ist.

## Claims

1. Connecting element having a casing (1) for retaining a protective hose (10) surrounding at least one electrical conductor, wherein the casing (1) is divided in the region of one end which is capable of being turned towards a union nut (2) and said end is provided with an inner contour adapted to an outer contour of the protective hose (10), characterised in that the casing (1) is divided by means of slits (5) in the direction of a longitudinal axis of the casing (1) over a partial region and the other end is designed to be unbroken in the form of an insertion socket (3) and also has an inner design permitting insertion of the protective hose (10), whereby the casing parts (7,8) divided by slits (5) are designed to be capable of being braced resiliently in relation to one another.

2. Connecting element according to Claim 1, characterised in that the division taking the form of a slit (5) proceeding from one end of the casing (1) in the direction of an insertion socket (3) arranged in the region of the other end extends over at least roughly one half of the longitudinal extent of the casing (1).

3. Connecting element according to Claim 1 or 2,
characterised in that the slit (5) in the region of its end facing the insertion socket (3) is merged into an end recess (6) which reduces notch stresses.

4. Connecting element according to one of Claims 1 to 3, characterised in that the casing (1) extends in the significant region of its extent along a longitudinal axis (16) in roughly linear manner.

5. Connecting element according to one of Claims 1 to 3, characterised in that the casing (1) extends at least along one part of its extent in the shape of an arc.

6. Connecting element according to Claim 5, characterised in that a slit (5) is disposed in each case in lateral regions with respect to the largest radius of curvature of the curved part of the arc-shaped casing (1).

7. Connecting element according to Claim 5, characterised in that a slit (5) is disposed in the region of an inner curved part and an additional slit (5) is disposed in the region of an outer curved part of the arc-shaped casing (1).

8. Connecting element according to Claim 5, characterised in that one of the slits (5) is designed as a recess which is formed as a tool recess (11) with a view to enabling introduction of a slide of an injection-moulding tool and which is disposed in the region of an outer curved part of the arc-shaped casing (1).

## Revendications

1. Elément de connexion qui présente un boîtier (1) destiné à fixer une gaine de protection (10) entourant au moins un conducteur électrique, dans le cas duquel ledit boîtier (1) est divisé dans la zone d'une extrémité tournée vers un écrou-raccord (2), ladite extrémité étant pourvue d'un contour interne adapté à un contour externe de la gaine de protection (10), caractérisé en ce que la division du boîtier (1) s'étend par l'intermédiaire de fentes (5) dans la direction d'un axe longitudinal du boîtier (1) sur une partie du boîtier et l'autre extrémité est conçue de manière fermée telle une tubulure d'insertion (3) de même qu'elle est pourvue d'un espace interne permettant une insertion de la gaine de protection (10), les parties du boîtier (7, 8) séparées par les fentes (5) étant conçues de manière à pouvoir être fixées l'une contre l'autre de façon élastique.

2. Elément de connexion selon la revendication 1, caractérisé en ce que la séparation conçue comme une fente (5) s'étend à partir d'une extrémité du boîtier (1) dans la direction d'une tubulure d'insertion (3) disposée dans la zone de l'autre extrémité du moins sur environ la moitié de l'extension longitudinale du boîtier (1).

3. Elément de connexion selon l'une ou l'autre des revendications 1 et 2, caractérisé en ce que la fente (5) dans la zone de son extrémité tournée vers la tubulure d'insertion (3) se termine dans un creux d'extrémité (6) réduisant les tensions de l'entaillage.

4. Elément de connexion selon l'une ou l'autre des revendications 1 à 3, caractérisé en ce que le boîtier (1) s'étend dans la zone principale de son extension de façon quelque peu linéaire le long d'un axe longitudinal 16).

5. Elément de connexion selon l'une ou l'autre des revendications 1 à 3, caractérisé en ce que le boîtier (1) s'étend du moins le long d'une partie de son extension de façon arquée.

6. Elément de connexion selon la revendication 5, caractérisé en ce que une fente (5) est aménagée, en fonction du plus grand rayon de courbure du parcours de flexion du boîtier (1) arqué, dans les zones latérales.

7. Elément de connexion selon la revendication 5, caractérisé en ce que une fente (5) est aménagée dans la courbe interne de flexion et en ce que une autre fente (5) est aménagée dans la courbe externe du boîtier (1) arqué.

8. Elément de connexion selon la revendication 5, caractérisé en ce que une des fentes (5) est conçue comme un creux formé tel l'évidement d'un outil (11) destiné à permettre l'insertion d'une soupape d'un outil de coulée de pression, ledit creux étant aménagé dans la zone de courbure externe du boîtier (1) arqué.
